Europäisches Patentamt

European Patent Office

Office européen des brevets

(19)

(11) Veröffentlichungsnummer : **0 249 703 B**

(12) ## EUROPÄISCHE PATENTSCHRIFT

(45) Veröffentlichungstag der Patentschrift :
04.09.91 Patentblatt 91/36

(51) Int. Cl.$^5$ : **B29C 45/04**

(21) Anmeldenummer : **87105258.5**

(22) Anmeldetag : **09.04.87**

(54) Spritzgiessmaschine mit mindestens zwei Plastifizier- und Einspritzeinheiten.

(30) Priorität : **14.06.86 DE 3620175**

(43) Veröffentlichungstag der Anmeldung :
**23.12.87 Patentblatt 87/52**

(45) Bekanntmachung des Hinweises auf die
Patenterteilung :
**04.09.91 Patentblatt 91/36**

(84) Benannte Vertragsstaaten :
**AT BE CH DE ES FR GB IT LI LU NL SE**

(56) Entgegenhaltungen :
**EP-A- 0 058 947**
**DE-B- 1 215 353**

(56) Entgegenhaltungen :
**GB-A- 725 429**
**US-A- 3 838 961**
**US-A- 3 887 316**
**PATENT ABSTRACTS OF JAPAN, Band 5, I**
**101 (M-76)[773], 30. Juni 1981; & JP-A-56 44 6**
**(NIPPON SEIKOSHO K.K.) 23-04-1981**

(73) Patentinhaber : **BASF Aktiengesellschaft**
**Carl-Bosch-Strasse 38**
**W-6700 Ludwigshafen (DE)**

(72) Erfinder : **Nesch, Wolfgang**
**In der Waldstrasse 82**
**W-7630 Lahr-Sulz (DE)**
Erfinder : **Schmidts, Kurt**
**Kornstrasse 10**
**W-7640 Kehl (DE)**

## Beschreibung

Die Erfindung betrifft eine Spritzgießmaschine mit mindestens zwei Plastifizier- und Einspritzeinheiten, mit zwei Formaufspannplatten für die einen Formhälften von Spritzgießformen, wobei mindestens die eine Formaufspannplatte auf feststehenden Holmen verschiebbar geführt ist, und mit einem zwischen diesen einen Formhälften um seine Achse verschwenkbaren und in Richtung der feststehenden Holme verschiebbaren prismatischen Trägerkörper, dessen zu seiner Achse parallele Seitenflächen die anderen Formhälften der Spritzgießform aufweisen.

Spritzgießmaschinen mit zwei Plastifizier- und Einspritzeinheiten und einem prismatischen Trägerkörper sind bekannt (DE-PS 12 15 353), wobei die beiden Formaufspannplatten auf den feststehenden Holmen verschiebbar geführt sind.

Zum Einspritzen von plastifiziertem Material werden die jeweils einander gegenüberstehenden Formhälften der beiden Formaufspannplatten und des prismatischen Körpers unter Bildung von geschlossenen Spritzgießformen zur Anlage gebracht, wobei die eine Spritzgießform einen gespritzten verlorenen Kern aufweist, der im vorhergehenden Spritzzyklus gespritzt wurde, während die andere Spritzgießform leer ist.

Nach dem Einspritzen von plastifiziertem Material, das gleichzeitig durch die beiden Plastifizier- und Einspritzeinheiten erfolgt, weist die eine Spritzgießform ein fertiggespritztes Spritzgußteil auf, und die andere Spritzgießform einen verlorenen Kern.

Anschließend werden die Spritzgießformen geöffnet, indem die verschiebbare Formaufspannplatten auf den feststehenden Holmen entsprechend verfahren werden. Da zwischen den Formaufspannplatten und den Führungen für den prismatischen Trägerkörper auf den Holmen Druckfedern angeordnet sind, werden durch das entsprechende Verschieben der verschiebbaren Formaufspannplatten automatisch die Spritzgießformen geöffnet, so daß der prismatische Körper verschwenkt werden kann. Er wird so verschwenkt, daß der verlorene Kern mitsamt seiner Formhälfte in die Position der Formhälfte mit dem verlorenen Kern des vorausgegangenen Spritzzyklus verschwenkt wird. Anschließend werden durch entsprechendes Verfahren der verschiebbaren Formaufspannplatten unter Bildung von Spritzgießformen die einander gegenüberstehenden Formhälften in Schließstellung gebracht und wiederum Material eingespritzt, so daß wiederum ein fertiger Spritzgußartikel und ein verlorener Kern gleichzeitig gespritzt werden.

Durch Verarbeiten von unterschiedlichem Kunststoffmaterial mit den beiden Plastifizier- und Spritzeinheiten können Spritzgußartikel hergestellt werden, die zwei Bereiche unterschiedlicher Werkstoffeigenschaften bzw. verschiedene Farbgebungen aufweisen.

Die beiden Plastifizier- und Einspritzeinheiten bilden jeweils mit der zugeordneten verschiebbaren Formaufspannplatte auf den Holmen geführte verschiebbare Baueinheiten.

Zum Schließen und Öffnen der von den jeweiligen Formhälften zu bildenden Spritzgießformen dient als Schließeinheit ein Kniehebelgelenk, das an der einen verschiebbaren Plastifizier- und Einspritzeinheit und am Maschinenrahmen angelenkt und mittels eines hydraulischen Arbeitszylinders beaufschlagbar ist.

Die Achse des prismatischen Trägerkörpers ist in zwei Führungshülsen drehbar gelagert, die auf den feststehenden Holmen verschiebbar angeordnet sind. Zwischen diesen Hülsen und den Formaufspannplatten sind die oben erwähnten Druckfedern angeordnet.

Der prismatische Trägerkörper hat senkrecht zu seiner Achse den Umriß eines regelmäßigen Sechseckes, wobei seine zur Achsenrichtung parallelen Seitenflächen Formhälften tragen und seine Achse horizontal und senkrecht zu seiner Bewegungsrichtung, d. h. senkrecht zu den Holmen verläuft.

Diese Spritzgießmaschinen weisen erhebliche Nachteile auf: Im allgemeinen ist man bestrebt, bei Spritzgießmaschinen die kinetische Energie der auf den Holmen zu verschiebenden Massen möglichst gering zu halten, da die Gesamtmasse aus der einen Endstellung, d. h. der maximalen Offenstellung der Spritzgießformen aus der Ruhelage möglichst schnell auf eine vorgegebene Maximalgeschwindigkeit zu beschleunigen ist, die dann bis zur Erreichung des Formschließsicherungspunktes konstant zu halten ist, ab dem dann ein Abbremsen der gesamten Masse so erfolgt, daß die Formen unter Kriechgeschwindigkeit geschlossen werden. Es liegt auf der Hand, daß möglichst kurze Spritzzykluszeiten mit möglichst geringen Wegstrecken zur Beschleunigung der Gesamtmasse aus der Ruhestellung auf die maximale Geschwindigkeit und mit einem möglichst geringen Restweg vom Formschließsicherungspunkt bis zur Schließstellung der Formen gleichbedeutend mit einer möglichst kleinen zu beschleunigenden Masse sind.

Eine Reduzierung der gesamten zu bewegenden Masse bei diesen Spritzgießmaschinen führt jedoch insoweit noch nicht zum Ziel, da der Trägerkörper mit seinen Hülsen und den Druckfedern zwischen den Formaufspannplatten während der dynamischen Bewegungsabläufe mit ihnen ein gedämpftes schwingungsfähiges System bildet und seine Formhälften gegen die Formhälften der Formaufspannplatten prellen, sobald die Zeit für die Spritzzyklen nicht ausreichend lang bemessen ist, so daß die Spritzzyklen dieser Spritzgießmaschinen im Vergleich zum Spritzzyklus moderner Maschinen, zwischen deren Formaufspannplatten lediglich die Formhälften von Spritzgießformen angeordnet sind, zu lang ist. Offensichtlich liegt hier einer der Gründe, weshalb sich diese Spritzgießmaschinen mit einem zusätzlichen prismatischen Trägerkörper zwischen den Formaufspannplatten bisher nicht durchsetzen konnten.

Ausgehend von diesen Überlegungen liegt der Erfindung die Aufgabe zugrunde, Spritzgießmaschinen dieser Art derart auszubilden, daß das Schließen der Spritzgießform unter Kriechgeschwindigkeit sichergestellt ist und die Spritzzyklen möglichst kurz sind und Spritzgußartikel herstellbar sind, die mehr als zwei Abschnitte aus Kunststoffmaterial mit unterschiedlichen Farbgebungen bzw. Farbtönen bzw. abwechselnd durchsichtige und undurchsichtige Bereiche aufweisen.

Diese Aufgabe wird erfindungsgemäß dadurch gelöst, daß verschiebbare Holme von der auf den Holmen verschiebbaren Formaufspannplatte geführt sind, der prismatische Trägerkörper im Bereich zwischen den beiden Formaufspannplatten in den verschiebbaren Holmen drehbar gelagert ist, auf der vom Trägerkörper abgewandten Seite der verschiebbaren Formaufspannplatte mindestens ein Antrieb für die beiden verschiebbaren Holme angeordnet ist, die verschiebbare Formaufspannplatte mindestens einen Angußkanal aufweist, der in eine zu ihrer Bewegungsrichtung parallele Seitenfläche mündet und die eine Plastifizier- und Einspritzeinheit mit diesem Angußkanal in Eingriff bringbar ist.

Aufgrund dieses Prinzips ist es möglich, die Bewegungsabläufe des Trägerkörpers exakt zu steuern, und zwar derart, daß die jeweils in Abhängigkeit der Stellung des Trägerkörpers zu bildenden Spritzgießformen stets unter Kriechgeschwindigkeit geschlossen werden, wobei es völlig unbeachtlich ist, ob die auf dem Trägerkörper aufgespannten Formhälften eine gleiche oder eine unterschiedliche Höhe aufweisen. Zum Sicherstellen, daß die gebildeten Spritzgießformen stets unter Kriechgeschwindigkeit geschlossen werden, ist es erforderlich, die Bewegung der verschiebbaren Holme entsprechend zu steuern. Prinzipiell kann für jeden dieser verschiebbaren Holme auf der von dem Trägerkörper abgewandten Seite der verschiebbaren Formaufspannplatte ein Antrieb, beispielsweise ein entsprechend gesteuerter Schrittmotor vorgesehen sein, dessen Programm die Formhöhe der auf die Trägerkörper aufgespannten Formhälften berücksichtigt, wobei selbstverständlich von einer Ausgangsstellung des Trägerkörpers auszugehen ist, und der jeweilige Drehwinkel des Trägerkörpers eine Anzeige dafür ist, welche aufgespannte Formhälfte mit der Formhälfte der verschiebbaren Aufspannplatte gegenüberstehend angeordnet ist. Entsprechendes gilt selbstverständlich für die Zuordnung der aufgespannten Formhälften des prismatischen Körpers zu der auf der anderen Formaufspannplatte aufgespannten Formhälfte. Statt eines Antriebes für jeden Holm kann auch ein einziger Antrieb für beide verschiebbaren Holme in der Weise vorgesehen werden, daß die verschiebbaren Holme auf der vom prismatischen Trägerkörper abgewandten Seite durch eine Traverse verbunden sind und zwischen der Traverse und der von dem Trägerkörper abgewandten Seite der verschiebbaren Formaufspannplatte der Antrieb vorgesehen ist, der auch ein hydraulischer bzw. pneumatischer Arbeitszylinder sein kann. Nach Schließen der von der auf der einen verschiebbaren Formaufspannplatte aufgespannten Formhälfte und der gegenüberliegend angeordneten Formhälfte des Trägerkörpers gebildeten Spritzgießform wird mit einer an sich bekannten Schließeinheit die aus der einen verschiebbaren Formaufspannplatte und dem Trägerkörper gebildete verschiebbare Einheit in Richtung zu der anderen feststehenden Formaufspannplatte verfahren, wobei in an sich bekannter Weise kurz vor Erreichen der Schließstellung der von der aufgespannten Formhälfte des prismatischen Körpers und der auf der feststehenden Formaufspannplatte aufgespannten Form definierten Spritzgießform die restliche Bewegung unter Kriechgeschwindigkeit verläuft. Dadurch, daß in völliger Abkehr vom bisherigen Stand der Technik auf der einen der verschiebbaren Formaufspannplatten keine Plastifizier- und Spritzeinheit angeordnet ist, die notwendigerweise mit der verschiebbaren Formaufspannplatte verfahren werden müßte, ist die gesamte zu bewegende Masse erheblich reduziert und liegt in der gleichen Größenordnung wie bei den bekannten Spritzgießmaschinen, die zwischen den Formaufspannplatten lediglich Spritzgießformen aufweisen.

Nach Schließen der Spritzgießformen wird die der verschiebbaren Formaufspannplatte zugeordnete Plastifizier- und Einspritzeinheit mit dem Angußkanal in der Formaufspannplatte in Eingriff gebracht, wobei in völliger Abkehr vom bisherigen Stand der Technik diese Plastifizier- und Einspritzeinheit so angeordnet ist, daß sie in Schließstellung der Spritzgießformen mit dem Angußkanal in Eingriff gebracht wird, der ebenfalls in völliger Abkehr vom bisherigen Stand der Technik so angeordnet ist, daß er in eine zur Bewegungsrichtung der verschiebbaren Formaufspannplatte parallele Seitenfläche mündet, wobei die Plastifizier- und Einspritzeinheit erfindungsgemäß ebenfalls in der zur Bewegungsrichtung der verschiebbaren Formaufspannplatte senkrechten Richtung verschiebbar angeordnet ist.

Erfindungsgemäß weist die verschiebbare Formaufspannplatte mindestens einen in dieser Weise erfindungsgemäß ausgebildeten Angußkanal auf. Sie kann prinzipiell drei derartige Angußkanäle aufweisen, die jeweils getrennt voneinander einen in Bewegungsrichtung der verschiebbaren Formaufspannplatte abgewinkelten Abschnitt aufweisen, die in an sich bekannter Weise in das Formnest, jedoch im vorliegenden Fall unabhängig voneinander münden, so daß es beispielsweise möglich ist, an drei Seiten des verlorenen Kerns plastifiziertes Material unter Herstellung des fertigen Spritzgußartikels anzuspritzen.

Im einfachsten Fall hat der prismatische Trägerkörper senkrecht zu seiner Achse einen quadratischen Umriß, er kann auch einen Umriß eines unregelmäßigen N-Eckes haben, wobei lediglich die Bedingung zu erfüllen ist, daß die einander diametral gegenüberliegenden Seitenflächen des prismatischen Körpers parallel und in der Schließstellung der Spritzgießformen parallel zu den Formaufspannplatten sind.

In einer Ausgestaltung der Erfindung hat der prismatische Trägerkörper den Umriß mindestens eines Sechsecks, wobei die verschiebbaren Holme in einer vertikalen Ebene verlaufen, wobei nach Schließen der Spritzgießformen die durch auf den Formaufspannplatten und den auf dem prismatischen Trägerkörper angeordneten Formhälften gebildet sind, die weiteren Formhälften des prismatischen Trägerkörpers mit weiteren Formhälften auf weiteren Formaufspannplatten zum Bilden von geschlossenes Spritzgießformen in Eingriff bringbar sind.

Durch diese Maßnahmen wird erreicht, daß zusätzlich weitere Plastifizier- und Einspritzeinheiten mit zugeordneten weiteren Formaufspannplatten und Formhälften in Einsatz gebracht werden können, so daß beispielsweise während eines Spritzzyklus die Anzahl der fertiggestellten Spritzgußartikel wesentliche erhöht werden kann. Es ist auch möglich, während des gleichen Spritzzyklus zusätzlich weiteres plastifiziertes Kunststoffmaterial mit anderen Werkstoffeigenschaften in die Spritzgießformen einzuspritzen, so daß am Ende eins Spritzzyklus der in mehreren Spritztakten gespritzte Spritzgußartikel eine entsprechend große Anzahl unterschiedlicher Materialbereiche bzw. Abschnitte verschiedener Werkstoffeigenschaften aufweist.

In einer weiteren Ausgestaltung der Erfindung ist der Antrieb für die verschiebbaren Holme der Arbeitszylinder für den Auswerfer, wobei der Arbeitszylinder auf der von dem prismatischen Trägerkörper abgewandten Seite der verschiebbaren Formaufspannplatte und zwischen einer die verschiebbaren Holme verbindenden Traverse und der verschiebbaren Formaufspannplatte angeordnet ist.

In einer weiteren Ausgestaltung der Erfindung weisen die feststehende Platte und die verschiebbare Formaufspannplatte auf den einander zugewandten Seiten jeweils eine Zahnstange auf, wobei zwischen den beiden Zahnstangen an einem Profil, das an einem der verschiebbaren Profile angeflanscht ist, ein mit ihnen kämmendes Ritzel angeordnet ist, das Ritzel gemeinsam mit den verschiebbaren Holmen verschiebbar ist, so daß der Abstand der Formhälften der verschiebbaren Formaufspannplatte und des prismatischen Trägerkörpers gleich dem halben, von der verschiebbaren Formaufspannplatte auf den Holmen zurückgelegten Weg zwischen ihren beiden Endstellungen beträgt.

Durch diese Maßnahme wird erreicht, daß in der Endstellung der verschiebbaren Formaufspannplatte, die dem maximalen Abstand der Formhälften der geöffneten Spritzgießformen entspricht, der Trägerkörper sich in der Mitte zwischen der verschiebbaren und der feststehenden Formaufspannplatte befindet.

Die Erfindung wird anhand von Ausführungsbeispielen in den Zeichnungen näher erläutert. Es zeigen:

Fig. 1 ein erstes Ausführungsbeispiel,

Fig. 2 eine Draufsicht auf das Ausführungsbeispiel in Fig. 1,

Fig. 3 eine Seitenansicht eines zweiten Ausführungsbeispiels,

Fig. 4 eine Draufsicht auf das Ausführungsbeispiel in Fig. 3,

Fig. 5 ein weiteres Ausführungsbeispiel für einen Trägerkörper und

Fig. 6 in der Darstellung der Fig. 1 ein Ausführungsbeispiel für die Steuerung der Stellung des Trägerkörpers in Abhängigkeit der Stellung der verschiebbaren Formaufspannplatte.

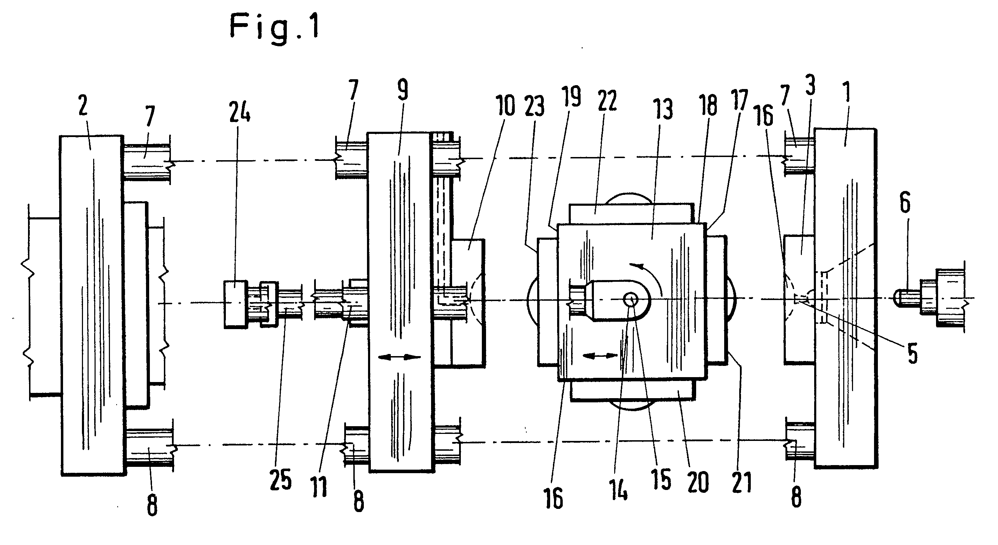

Fig. 1 zeigt eine Seitenansicht des ersten Ausführungsbeispiels. Auf einem nicht dargestellten Maschinenrahmen sind zwei feststehende Platten 1 und 2 angeordnet.

Die Platte 1 bildet zugleich die feststehende Formaufspannplatte für eine Formhälfte 3, die in an sich bekannter Weise ein Formnest 4 aufweist.

Die feststehende Formaufspannplatte weist weiterhin eine Angußbohrung 5 auf, über die in an sich bekannter Weise die im Ausschnitt dargestellten Plastzifizier- und Einspritzeinheit 6, das plastifizierte Kunststoffmaterial einspritzt.

Die Platten 1 und 2 bilden mit einem oberen Holmenpaar 7 und einem unteren Holmenpaar 8 eine Führung für die verschiebbare Formaufspannplatte 9, die auf ihrer der feststehenden Formaufspannplatte 1 zugewandten Seite eine Formhälfte 10 aufweist. Von den beiden Holmenpaaren ist in Fig. 1 jeweils nur ein Holm sichtbar.

Die verschiebbare Formaufspannplatte 9 führt zwei Holme 11 und 12, die in jeder Stellung über die verschiebbare Formaufspannplatte 9 beidseitig hinausgeführt sind.

In dem Bereich zwischen den beiden Formaufspannplatten, d. h. im Bereich zwischen den Formhälften 3 und 10 ist an den beiden verschiebbaren Holmen ein Kernträgerkörper 13 in den Lagern 14 verdrehbar angeordnet. Er weist senkrecht zu seiner Achse 15 den Querschnitt eines prismatischen Körpers, im vorliegenden Fall eines regelmäßigen Viereckes auf.

Auf den zu der Achse 15 parallelen Seitenflächen 16, 17, 18 und 19 sind jeweils Hälften von Spritzgießformen angeordnet, die mit 20 bzw. 21 bzw. 22 bzw. 23 bezeichnet sind.

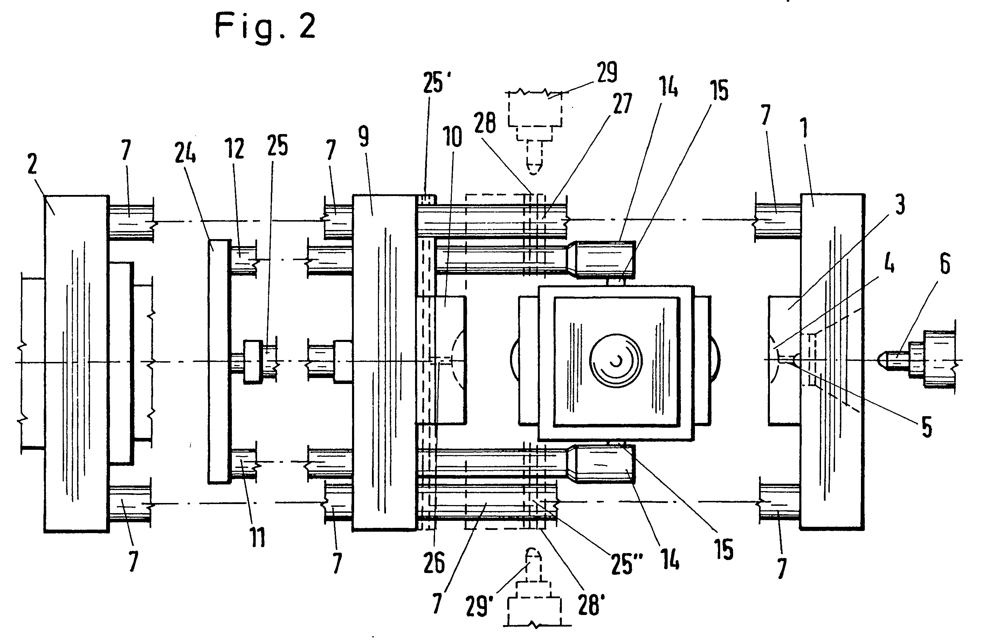

Auf der von dem Kernträgerkörper abgewandten Seite der verschiebbaren Formaufspannplatte sind die Endabschnitte der beiden verschiebbaren Holme durch eine Traverse 24 verbunden (Fig. 2). Zwischen dieser Traverse und der verschiebbaren Formaufspannplatte ist ein doppelseitig beaufschlagbarer Arbeitszylinder, im vorliegenden Fall ein pneumatischer bzw. hydraulischer Arbeitszylinder 25 angeordnet, durch dessen entsprechender Beaufschlagung die Relativbewegungen der verschiebbaren Holme mitsamt dem Trägerkörper in bezug auf die verschiebbare Formaufspannplatte 9 erfolgen.

Fig. 2 zeigt eine Draufsicht auf das Ausführungsbeispiel der Fig. 1, aus der die paarweise Anordnung der Holme 7 sowie der Holme 11 und 12 hervorgeht (das Holmenpaar 8 ist in Fig. 2 nicht sichtbar).

In Fig. 1 und 2 ist die in an sich bekannter Weise ausgebildete Schließeinheit der Übersichtlichkeit halber nicht dargestellt.

Sie ist im einfachsten Fall ein Kniehebelgelenk, das mittels eines bekannten, doppelseitig beaufschlagbaren hydraulischen Arbeitszylinder die verschiebbare Formaufspannplatte aus der einen Endstellung, d. h. der Stellung mit dem maximalen Abstand der Formaufspannplatten in die andere Endstellung, d. h. minimalem Abstand der beiden Formaufspannplatten und somit gleichzeitiger Bildung einer geschlossenen Spritzgießform von zwei einander gegenüberliegend angeordneten Formhälften bringt. Als Schließeinheit kann auch eine bekannte Schließeinheit mit Fahrzylindern und Formzuhaltezylindern zum Einsatz kommen, die die verschiebbare Formaufspannplatte während eines Spritzzyklus ebenfalls zwischen diesen beiden Stellungen verschiebt.

In Fig. 2 ist strichliert die Position der verschiebbaren Formaufspannplatte in ihrer zweiten Endstellung gezeigt. Strichliert ist weiterhin der Angußkanal eingezeichnet, über den in das Formnest der von den beiden Formhälften 23 und 10 nach Schließen der durch sie definierten Spritzgießform das plastifizierte Kunststoffmaterial mittels einer zweiten Plastifizier und Einspritzeinheit eingespritzt wird. Dieser Angußkanal besteht aus einem parallel zur Richtung der Holme verlaufenden Abschnitt 27, der in die eine senkrecht zur Bewegungsrichtung und damit parallel zur Richtung der Holme verlaufenden Stirnseite 28 mündet und dem zweiten Abschnitt 26.

Die zweite Plastifizier- und Einspritzeinheit ist mit 29 bezeichnet und ist senkrecht zu den Holmen 7, 8 und auch senkrecht zu den Holmen 11 und 12 verschiebbar geführt. Sobald die verschiebbare Formaufspannplatte ihre zweite Endstellung erreicht hat, wird die zweite Plastifizier- und Einspritzeinheit, die sich zuvor außerhalb des Bereiches der verschiebbaren Formaufspannplatte befand, in der zur Holmenrichtung senkrechten Richtung verfahren, bis es gegen die in die Seitenfläche 28 mündende Angußbohrung 27 eingreift.

Unterhalb der Holme 8 in den Fig. 1 und 2 verläuft in horizontaler Ebene ein nicht dargestelltes Endlosband im Bereich der feststehenden Formaufspannplatte 1, das die fertiggestellten Spritzgußartikel wegtransportiert.

Die verschiebbare Formaufspannplatte 9 kann anstelle der einen Angußbohrung 26, 27 noch eine zweite Angußbohrung 26', 27' aufweisen, die in die zur Seitenfläche 28 gegenüberliegende Seitenfläche 28' ausläuft und für die dann eine zweite strichliert dargestellte Plastifizier- und Einspritzeinheit, die mit 29' bezeichnet ist, vorgesehen ist.

In den Fig. 1 und 2 ist die Spritzgießmaschine in einer Zwischenstellung zwischen den beiden Endstellungen gezeigt. Der Abstand des Trägerkörpers 13 zur verschiebbaren Formaufspannplatte 9 ist so groß, daß der Trägerkörper um seine Achse verschwenkt werden kann, und zwar im vorliegenden Fall um 90°. Nach einem derartigen Verschwenken sind die Formhälften 10 auf der verschiebbaren Formaufspannplatte 9 und die Formhälfte 23 des Trägerkörpers 13 einander gegenüberstehend angeordnet, wobei gleichzeitig die Formhälfte 21 des Trägerkörpers und die Formhälfte 3 der feststehenden Formaufspannplatte 1 einander gegenüberstehend angeordnet sind.

Ein Spritzzyklus wird in der Weise eingeleitet, daß durch entsprechendes Beaufschlagen des Arbeitszylinders 25 die verschiebbaren Holme 11 und 12 den Kernträgerkörper in Richtung zu der verschiebbaren Formaufspannplatte 9 bewegen und daß kurz vor Schließen der durch die beiden Formhälften 10 und 23 gebildeten Spritzgießform die Geschwindigkeit so herabgesetzt wird, daß die Form unter Kriechgeschwindigkeit geschlossen wird. Anschließend wird durch Beaufschlagen der Fahrzylinder der nicht dargestellten Schließeinheit die von der verschiebbaren Formaufspannplatte und dem Trägerkörper sowie den verschiebbaren Holmen 11 und 12 gebildete Einheit in Richtung auf die feststehende Formaufspannplatte 1 bewegt, wobei ebenfalls kurz vor dem Schließen der Form die Geschwindigkeit dieser Einheit so herabgesetzt wird, daß die aus den beiden Formhälften 21 und 3 zu bildende Spritzgießform unter Kriechgeschwindigkeit geschlossen wird.

Anschließend wird die Plastifizier- und Einspritzeinheit 29 in Richtung auf die Holme 7, 8 bzw. 11 und 12 so verfahren, daß sie in Eingriff mit dem in die Seiten 28 mündenden Angußkanal 25 gelangt. Anschließend injiziert die Plastifizier- und Einspritzeinheit eine entsprechende Menge an plastifiziertem Material in die durch die Formhälften 10 und 23 gebildete Spritzgießform, während die Plastifizier- und Einspritzeinheit 6 ebenfalls plastifiziertes Material in die durch die beiden Formhälften 3 und 21 gebildete Spritzgießform injiziert, wobei in der Spritzgießform aus den Formhälften 3 und 21 ein verlorener Kern und in der von den Formhälften 10 und 23 gebildeten Spritzgießform ein fertiger Spritzgußartikel hergestellt wird.

Anschließend wird die verschiebbare Formaufspannplatte 9 auf den Holmen 7 und 8 und die verschiebbaren Holme 11 und 12 so verfahren, daß die Formhälften 10 und 23 sowie 21 und 3 außer Eingriff gelangen und der Trägerkörper 13 entgegen dem Uhrzeigersinn um 90° verdreht, daß die Formhälften 11 und 22 sowie 20 und 3 einander gegenüberstehend angeordnet sind. Anschließend werden die verschiebbare Formaufspannplatte 9 und die verschiebbaren Holme 11, 12 so verfahren, daß die aus den Formhälften 10 und 22 sowie 20 und 3 gebildeten Spritzgießformen geschlossen werden und gleichzeitig in der beschriebenen Weise ein verlorener Kern und ein fertiggestellter Spritzgußartikel gespritzt werden können.

Bei jedem Drehtakt gelangt eine der auf dem Trägerkörper angeordneten Formhälften in die aus Fig. 1 ersichtliche Position der Formhälfte 20, wobei dann in einer in dieser Position befindlichen Formhälfte der fertiggestellte Spritzgußartikel aus dieser Form ausgeworfen wird. Dies erfolgt in an sich bekannter Weise mittels eines Auswerfers. Dieser kann in dem Trägerkörper angeordnet sein, so daß der Spritzgußartikel dann auf das unterhalb der Holme 8 in horizontaler Ebene verlaufende endlose Transportband 30 fällt, es kann auch der Auswerfer in die verschiebbare Formaufspannplatte 9 integriert sein, der dann den fertiggestellten Spritzgußartikel aus der Formhälfte 10 ausstößt. Im letzteren Fall ist das Transportband entsprechend mehr in Richtung zur feststehenden Platte 2 angeordnet.

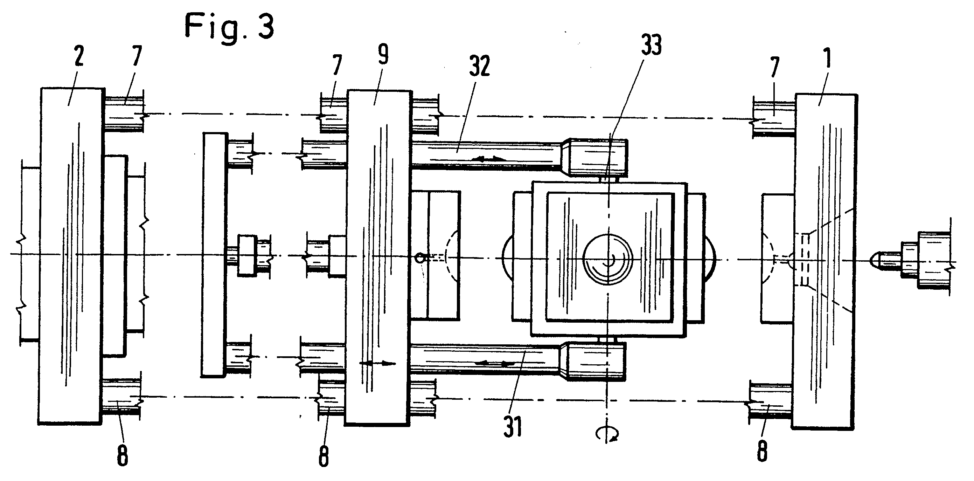

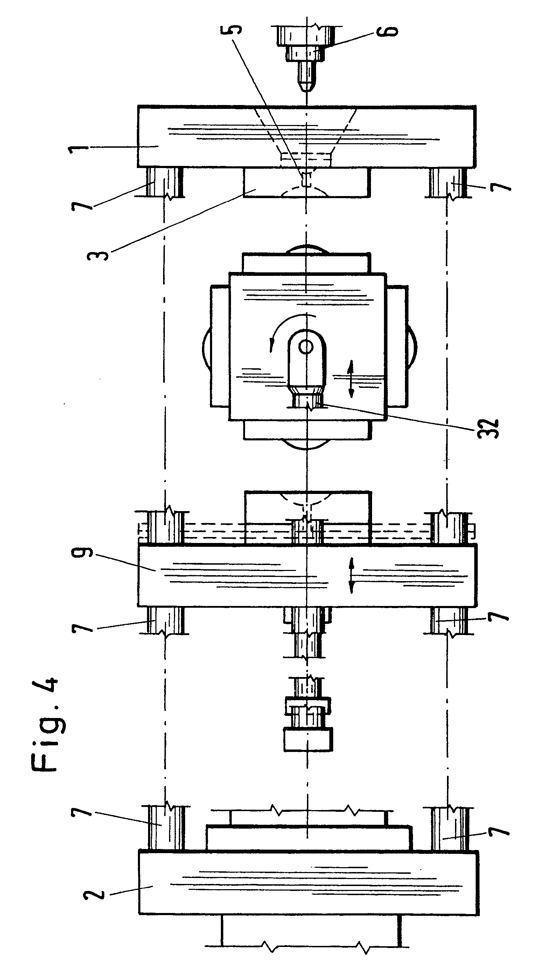

Die Fig. 3 und 4 zeigen in der Darstellung der Fig. 1 bzw. 2 ein weiteres Ausführungsbeispiel einer Spritzgießmaschine.

Gleiche Teile sind mit gleichen Bezugszeichen versehen.

Der Unterschied gegenüber dem Ausführungsbeispiel in den Fig. 1 und 2 besteht darin, daß die beiden, mit 31 und 32 bezeichneten verschiebbaren Holme in einer vertikalen Ebene geführt sind und daß somit die Achse 33 des Trägerkörpers ebenfalls in vertikaler Richtung verläuft.

Der Trägerkörper in den Fig. 3 und 4 hat, wie aus Fig. 3 ersichtlich, wie der Trägerkörper in den Fig. 1 und 2 einen prismatischen Querschnitt, der einem regelmäßigen Viereck, d.h. einem Quadrat entspricht.

Der prismatische Querschnitt des Trägerkörpers ist jedoch weder an ein Viereck noch an einen Umriß eines regelmäßigen N-Eckes gebunden. Wesentlich ist, daß die einander gegenüberliegenden Seitenflächen des Trägerkörpers, die Formhälften aufweisen, zueinander parallel sind. Dies ist ohne weiteres aus den Fig. 1 und 4 ersichtlich, da die Formzuhaltekraft von der Schließeinheit aufgebracht werden muß.

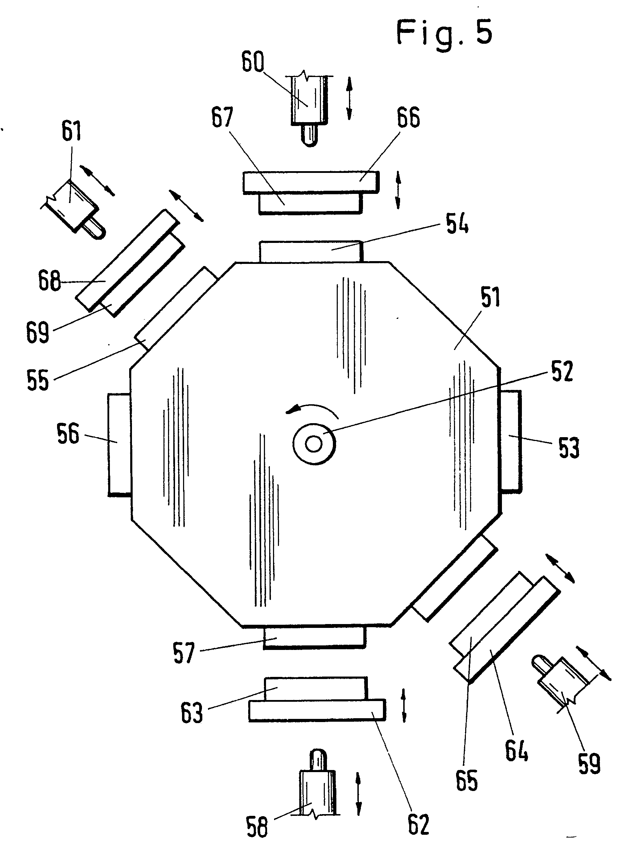

Fig. 5 zeigt in der Darstellung der Fig. 4 ein weiteres Ausführungsbeispiel des Trägerkörpers, der mit 51 bezeichnet ist und der an die Stelle des Trägerkörpers in den Fig. 3 und 4 tritt. Der Trägerkörper weist senkrecht zu seiner Achse 52 einen Umriß auf, der einem Achteck entspricht, wobei die gegenüberliegenden Seitenflächen, die sich in Richtung der Achse 52 erstrecken, gleichgroß sind und jeweils parallel zueinander ausgebildet sind. Der Trägerkörper 51 weist Formhälften 53, 54, 55, 56 und 57 auf.

Die Formhälften 53 und 56 entsprechen in ihrer Lage den Formhälften 21 bzw. 23 in den Fig. 3 und 4. Sie arbeiten in dem betreffenden Spritztakt folglich mit der Formhälfte 3 auf der feststehenden Formaufspannplatte 1 bzw. mit der Formhälfte 10 auf der verschiebbaren Formaufspannplatte 9 zusammen (nicht dargestellt).

Zusätzlich sind weitere Plastifizier- und Einspritzaggregate 58, 59, 60 und 61 vorgesehen.

Der weiteren Plastifizier- und Einspritzeinheit 58 ist eine weitere Formaufspannplatte 62 mit einer aufgespannten Formhälfte 63, der weiteren Plastifizier- und Einspritzeinheit 59 eine weitere Formaufspannplatte 64 und eine Formhälfte 65, der weiteren Plastifizier- und Einspritzeinheit 60 eine weitere Formaufspannplatte 66 mit einer aufgespannten Formhälfte 67 und der weiteren Plastifizier- und Einspritzeinheit 61 eine weitere Formaufspannplatte 68 mit einer aufgespannten Formhälfte 69 zugeordnet.

Jede der weiteren Plastifizier- und Einspritzeinheiten ist mit der zugeordneten weiteren Formaufspannplatte mitsamt der aufgespannten Formhälfte, wie aus der Zeichnung ersichtlich, in Richtung zur Achse des Trägerkörpers, und zwar in senkrechter Richtung zu der zugeordneten Trägerfläche verschiebbar angeordnet.

Die Plastifizier- und Einspritzaggregate 58 und 60 können mitsamt ihren weiteren Formaufspannplatten und ihren aufgespannten Formhälften an die Stelle der Plastifizier- und Einspritzeinheiten 29 und 29' in Fig. 2 bzw. 4 treten, sie können auch zusätzlich vorgesehen sein. Im letzteren Fall ist es möglich, Spritzgußteile herzustellen, die aus fünf Abschnitten unterschiedlicher Materialeigenschaften bestehen.

Dadurch, daß die weiteren Plastifizier- und Einspritzaggregate 58 und 60 mitsamt ihren weiteren Formaufspannplatten und aufgespannten Formhälften diametral einander gegenüberliegend zu beiden Seiten des Trägerkörpers angeordnet sind, ist die Achse 52 des Drehkörpers während der einzelnen Spritztakte von Kräften entlastet.

In gleicher Weise können zusätzlich noch die weiteren Plastifizier- und Einspritzaggregate 61 und 59 mit ihren Formaufspannplatten und Formhälften vorgesehen sein. In diesem Falle ist es möglich, die Leistung der in den Fig. 3 und 4 dargestellten Spritzgießmaschine zu verdoppeln, falls ebenfalls Spritzgußartikel mit zwei unterschiedlichen Materialbereichen bzw. Abschnitten hergestellt werden.

Mit der in Fig. 5 dargestellten Anordnung ist es auch möglich, Spritzgußartikel herzustellen, die sechs unterschiedliche Materialabschnitte aufweisen, falls die verschiebbare Formaufspannplatte mit einer Plastifizier- und Einspritzeinheit 29 (vgl. Fig. 3 bzw. 4) zusammenarbeitet.

Prinzipiell ist es möglich, auch die beiden nicht bezeichneten liegenden Flächen mit entsprechenden Formhälften zu versehen, die ebenfalls mit zugeordneten weiteren Plastifizier- und Einspritzeinheiten mit entsprechend zugeordneten weiteren Formaufspannplatten und Formhälften zusammenarbeiten können.

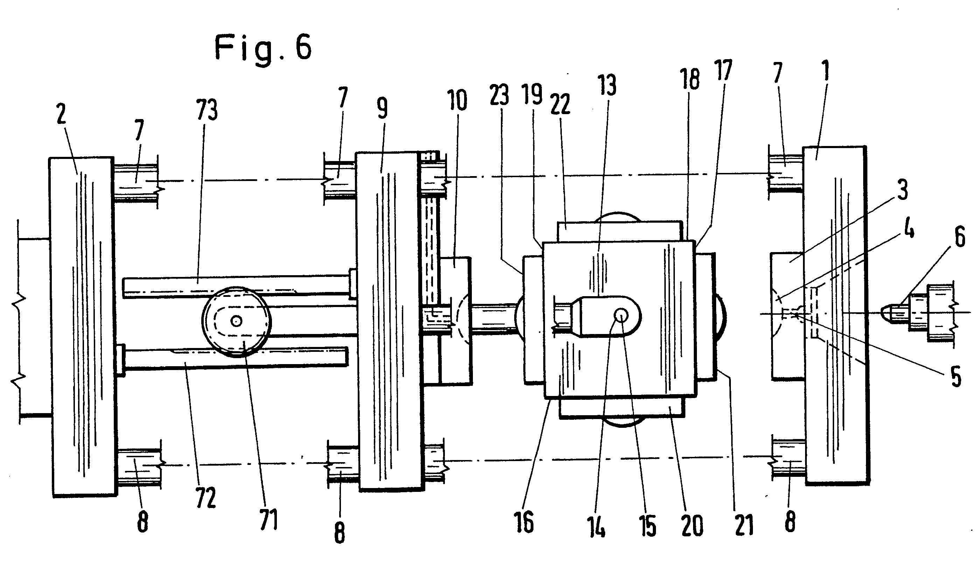

Fig. 6 zeigt in der Darstellung der Fig. 1 ein Ausführungsbeispiel für die Steuerung der Stellung des Trägerkörpers in Abhängigkeit der Stellung der verschiebbaren Formaufspannplatte 9.

Gleiche Teile sind mit gleichen Bezugszeichen bezeichnet. Der Übersichtlichkeit halber sind in Fig. 6 die verschiebbaren Holme 11, 12 auf der von dem Trägerkörper 13 abgewandten Seite der verschiebbaren Formaufspannplatte weggelassen.

An dem einen verschiebbaren Holm für die Trägerkörper 13 ist ein Profil 70 angeflanscht, das durch eine Öffnung in der verschiebbaren Formaufspannplatte 9 hindurchgeführt ist.

Am freien Ende des Profils 70 ist das Ritzel 71 drehbar gelagert. Es kämmt mit den Zahnstangen 72 und 73, die auf den einander zugekehrten Seiten der Platte 2 bzw. der verschiebbaren Formaufspannplatte 9 feststehend angeordnet sind. Der Trägerkörper 13 legt jeweils nur die Hälfte des Weges zurück, den die verschiebbare Formaufspannplatte zurücklegt. Befindet sich die verschiebbare Formaufspannplatte in ihrer der feststehenden Platte 2 benachbarten Endstellung, dann befindet sich der verschiebbare Trägerkörper genau in der Mitte zwischen den Formhälften 3 und 10.

Ein besonderer Vorteil besteht darin, daß die Drehbewegung des Kernträgerkörpers sofort eingeleitet werden kann, sobald die notwendige Öffnungsweite erreicht ist. Wartezeiten entfallen. Zykluszeit wird gespart und außerdem die Beschleunigungskräfte auf das Trägersystem des Kernträgerkörpers reduziert bzw. in mechanische Reproduktion der beweglichen Formplatte 9 gebracht. Der gesamte Öffnungsweg der Spritzgießmaschine kann somit genutzt werden, was optimale Nutzung des Formraums gewährleistet.

## Patentansprüche

1. Spritzgießmaschine mit mindestens zwei Plastifizier- und Einspritzeinheiten (6,29), mit zwei Formaufspannplatten (1,9) für die einen Formhälften (3,10) von Spritzgießformen, wobei mindestens die eine Formaufspannplatte auf feststehenden Holmen (7,8) verschiebbar geführt ist, und mit einem zwischen diesen einen Formhälften um seine Achse (15) verschwenkbaren und in Richtung der feststehenden Holme verschiebbaren prismatischen Trägerkörper (13), dessen zu seiner Achse parallele Seitenflächen die anderen Formhälften (21,23) der Spritzgießformen aufweisen, dadurch gekennzeichnet, daß verschiebbare Holme (11,12) von der auf den Holmen (7,8) verschiebbaren Formaufspannplatte (9) geführt sind, der prismatische Trägerkörper (13) im Bereich zwischen den beiden Formaufspannplatten (1,9) in den verschiebbaren Holmen drehbar gelagert ist, auf der vom Trägerkörper abgewandten Seite der verschiebbaren Formaufspannplatte mindestens ein Antrieb (25) für die beiden verschiebbaren Holme angeordnet ist, die verschiebbare Formaufspannplatte (9) mindestens einen Angußkanal (26,27) aufweist, der in eine zu ihrer Bewegungsrichtung parallele Seitenfläche mündet und die eine Plastifizier- und Einspritzeinheit (29) mit diesem Angußkanal in Eingriff bringbar ist.

2. Spritzgießmaschine nach Anspruch 1, dadurch gekennzeichnet, daß der prismatische Körper den Umriß mindestens eines Sechsecks hat und die verschiebbaren Holme in einer vertikalen Ebene verlaufen und daß jeweils nach Schließen der Spritzgießformen, die durch die auf den Formaufspannplatten und auf dem prismatischen Trägerkörper angeordneten Formhälften gebildet sind, die weiteren Formhälften (54,55,57) des prismatischen Trägerkörper mit auf weiteren Formaufspannplatten (62,66,68) angeordneten weiteren Formhälften (63,67,69) zum Bilden von geschlossenen Spritzgießformen in Eingriff bringbar sind.

3. Spritzgießmaschine nach Anspruch 1 oder 2, dadurch gekennzeichnet, daß der Antrieb für die verschiebbaren Holme (11,12) der Arbeitszylinder (25) für den Auswerfer ist und daß der Arbeitszylinder (25) auf der von dem prismatischen Körper abgewandte Seite der verschiebbaren Formaufspannplatte (9)und zwischen einer die verschiebbaren Holme verbindenden Traverse und der verschiebbaren Formaufspannplatte (9) angeordnet ist.

4. Spritzgießmaschine nach Anspruch 1, 2 oder 3, dadurch gekennzeichnet, daß die feststehende Platte (2) und die verschiebbare Formaufspannplatte (9) auf den einander zugewandten Seiten jeweils eine Zahnstange (72 bzw. 73) aufweisen, wobei zwischen den beiden Zahnstangen an einem Profil (70), das an einem der verschiebbaren Profile angeflanscht ist, ein mit ihnen kämmendes Ritzel (71) angeordnet ist, das Ritzel gemeinsam mit den verschiebbaren Holmen verschiebbar ist, so daß der Abstand der Formhälften der verschiebbaren Formaufspannplatte und des prismatischen Trägerkörpers gleich dem halben, von der verschiebbaren Formaufspannplatte auf den Holmen zurückgelegten Weg zwischen ihren beiden

Endstellungen beträgt.

tween its two end positions.

## Claims

1. An injection-molding machine with at least two plasticizing and injection units (6, 29), having two platens (1, 9) for the one mold halves (3, 10) of injection molds, at least one platen being guided displaceably on stationary tie bars (7, 8), and having a prismatic supporting body (13), which can be swivelled about its axis (15) between these one mold halves, and can be displaced in the direction of the stationary tie bars and the side surfaces of which, parallel to its axis, exhibit the other mold halves (21, 23) of the injection molds, wherein displaceable tie bars (11, 12) are guided by the platen (9) which is displaceable on the tie bars (7, 8), the prismatic supporting body (13) in the region between the two platens (1, 9) is rotatably mounted in the displaceable tie bars, on the side of the displaceable platen facing away from the supporting body there is arranged at least one drive (25) for the two displaceable tie bars, the displaceable platen (9) has at least one runner (26, 27), which opens out in a side surface parallel to the direction of movement of said platen, and the one plasticizing and injection unit (29) can be brought into engagement with this runner.

2. The injection-molding machine as claimed in claim 1, wherein the prismatic body has the outline at least of a hexagon and the displaceable tie bars run in a vertical plane and wherein, each time after closing of the injection molds, which are formed by the mold halves arranged on the platens and on the prismatic supporting body, the further mold halves (54, 55, 57) of the prismatic supporting body can be brought into engagement with further mold halves (63, 67, 69), arranged on further platens (62, 66, 68), for the forming of closed injection molds.

3. The injection-molding machine as claimed in claim 1 or 2, wherein the drive for the displaceable tie bars (11, 12) is the working cylinder (25) for the ejector and wherein the working cylinder (25) is arranged on the side of the displaceable platen (9) facing away from the prismatic body and between a cross head, connecting the displaceable tie bars, and the displaceable platen (9).

4. The injection-molding machine as claimed in claim 1 or 2 or 3, wherein the stationary plate (2) and the displaceable platen (9) have in each case on the mutually facing sides a rack (72 and 73 respectively), there being a pinion (71) arranged between the two racks, meshing with the latter, on a profile (70) which is flangemounted on one of the displaceable profiles, and said pinion can be displaced together with the displaceable tie bars, so that the distance between the mold halves of the displaceable platen and of the prismatic supporting body is equal to half the distance covered by the displaceable platen on the tie bars be-

## Revendications

1. Machine de moulage par injection avec au moins deux unités d'injection et de plastification (6, 29), avec deux plateaux de fixation de moule (1, 9) pour l'un des couples de demis-moules (3, 10) des moules d'injection, au moins l'un des couples de plateaux de fixation de moule étant monté déplaçable sur des traverses fixes (7, 8) et avec un corps de support (13) prismatique monté pivotant autour de son axe (15) entre ledit couple de demis-moules et déplaçable en direction des traverses fixes, corps de support dont les faces latérales parallèles à son axe présentent les autres demi-moules (21, 23) des moules d'injection, caractérisée par le fait que des traverses déplaçables (11, 12) sont guidées par le plateau de fixation de moules (9) déplaçable sur les traverses (7, 8), le corps de support prismatique (13) est monté tournant dans les traverses déplaçables dans une zone comprise entre les deux plateaux de fixation de moules (1, 9), au moins un moyen de commande (25) pour les deux traverses déplaçables est disposé du côté du plateau de fixation déplaçable écarté du corps de support, le plateau de fixation déplaçable (9) présente au moins un canal d'entrée (26, 27) qui débouche dans une face latérale parallèle à sa direction de déplacement et l'une des unités d'injection et de plastification (29) peut être amenée en prise avec ce canal d'entrée.

2. Machine de moulage par injection selon la revendication 1 caractérisée par le fait que le corps prismatique à la périphérie d'au moins un héxagone et les traverses déplaçables s'étendent dans un plan vertical et qu'après chaque fermeture des moules d'injection, qui sont formés par les demis-moules disposés sur les plateaux de fixation et sur le corps de support prismatique, les autres demis-moules (54, 55, 57) du corps de support prismatique peuvent être amenés en prise avec d'autres demis-moules disposés sur d'autres plateaux de fixation (62, 66, 68) pour former des moules d'injection fermés.

3. Machine de moulage par injection selon la revendication 1 ou 2, caractérisée par le fait que le moyen de commande pour les traverses déplaçables (11, 12) est le vérin (25) pour l'éjecteur et que le vérin (25) est disposé du côté du plateau de fixation déplaçable (9) éloigné du corps prismatique et entre une des traverses reliant les traverses déplaçables et le plateau de fixation déplaçable (9).

4. Machine de moulage par injection selon la revendication 1, 2 ou 3, caractérisée par le fait que le plateau de fixation fixe (2) et le plateau de fixation déplaçable (9) présentent chacun une crémaillère (72, 73), sur les côtés qui se font face et, sur un profilé (70) bridé sur une des traverses déplaçables, est monté, entre les deux crémaillères, un pignon (71) qui engrène avec elles, pignon qui est déplaçable en même temps que les traverses déplaçables de sorte que l'écartement entre les demis-moules des plateaux de fixation déplaçables et le corps de support prismatique est égal à la moitié du chemin parcouru par le plateau de fixation déplaçable sur les traverses entre ses deux positions extrêmes.

Fig.1

# Fig. 2

EP 0 249 703 B1

Fig. 3

Fig. 4

# Fig. 5

Fig. 6